# EUROPÄISCHE PATENTANMELDUNG

(11) **EP 0 965 782 A2**
(43) Veröffentlichungstag der Anmeldung: **22.12.1999**
(21) Anmeldenummer: 99106030.2
(22) Anmeldetag: 25.03.1999
(51) Int. Cl.: F16L 11/15

(54) **Schutzrohr für eine Versorgungsleitung**

(30) Priorität: 17.06.1998 DE 19826950
(71) Anmelder: Hewing GmbH, D-48607 Ochtrup (DE)
(72) Erfinder: Riesselmann, Franz-Josef, 49393 Lohne (DE); Dankbar, Bernhard, 48607 Ochtrup (DE)
(74) Vertreter: Hilleringmann, Jochen, Dipl.-Ing.

(57) **Zusammenfassung**

Ein Schutzrohr für eine Versorgungsleitung, insbesondere für ein mindestens eine Kunststoffschicht aufweisendes mediumführendes Rohr, weist ring- oder wendelförmige Stützelemente (10) und ring- oder wendelförmige Verformungselemente (12) auf, die in axialer Richtung aneinander angrenzend angeordnet sind. Die Verformungselemente (12) weisen eine höhere axiale Verformbarkeit als die Stützelemente (10) auf, so daß die Länge des Stützrohrs durch Aufbringen axialer Kräfte verkürzt werden kann. Die Stützelemente (10) weisen zum Schutz der innerhalb des Schutzrohrs angeordneten Versorgungsleitung eine hohe Steifigkeit und hohe Scheiteldruckfestigkeit auf. Die Verformbarkeit der Verformungselemente (10) kann durch entsprechende Materialwahl und/oder durch das Ausbilden von Ein- und Ausbuchtungen (18,20) realisiert werden.

## Beschreibung

Die Erfindung betrifft ein Schutzrohr für eine Versorgungsleitung, insbesondere für ein mindestens eine Kunststoffschicht aufweisendes mediumführendes Rohr. Bei diesem Rohr handelt es sich entweder um ein vollständig aus Kunststoff bestehendes Rohr oder um ein Verbundrohr, das eine Kunststoff-Innenschicht, eine Metalleinlage und eine Kunststoff-Außenschicht aufweist.

Zum Schutz von Versorgungsleitungen, beispielsweise elektrischen Kabeln oder mediumführenden Rohren, wie beispielsweise Brauchwasser- oder Heizungsrohren aus insbesondere Kunststoff, sind diese Versorgungsleitungen mit Spiel durch ein Schutzrohr hindurchgeführt, das zumeist als Wellrohr aus Kunststoff ausgeführt ist und dem mechanischen Schutz der Versorgungsleitungen dient. Hierzu weist das Schutzrohr eine ausreichende Scheiteldruckfestigkeit auf, so daß das Schutzrohr beispielsweise einer radialen Belastung durch das Körpergewicht einer Person beim (versehentlichen) Drauftreten standhält. Zumeist werden die Versorgungsleitungen vorkonfektioniert mit dem Schutzrohr als Rohr-in-Rohr-System an die Baustelle angeliefert. Auf der Baustelle muß dann diese Rohr-in-Rohr-Leitung der benötigten Länge entsprechend abgelängt werden. Anschließend müssen die Enden der Versorgungsleitungen/mediumführenden Rohre freigelegt werden, was dadurch erfolgt, daß das Schutzrohr in den Endbereichen abgeschnitten wird. Dabei kann es leicht zu Beschädigungen der Versorgungsleitungen/mediumführenden Rohre kommen, was aus sicherheitstechnischen Gründen nachteilig ist und darüber hinaus den Montageaufwand erhöht.

Aus EP 0 822 365 A1 ist ein Schutzrohr bekannt, bei dem zum Freilegen der Enden der Versorgungsleitungen/mediumführenden Rohre das Schutzrohr nicht abgetrennt wird, so daß die Versorgungsleitung/das mediumführende Rohr nicht beschädigt wird. Zum Freilegen der Enden kann das Schutzrohr in axialer Richtung zusammengedrückt werden. Das Schutzrohr weist mehrere voneinander beabstandete ringförmige Stützkörper mit entsprechender Scheiteldruckfestigkeit auf. Die einzelnen ringförmigen Stützkörper sind von einer geschlossenen Schutzhülle, die sich über die gesamte Länge des Schutzrohrs erstreckt, auf Abstand gehalten. Da die Schutzhülle flexibel ist, kann das Schutzrohr in axialer Richtung verformt werden, indem die ringförmigen Stützkörper aufeinander zu bewegt werden. Um die Enden der Versorgungsleitung/des mediumführenden Rohrs freizulegen und beispielsweise mit einem Anschlußstück zu versehen, muß das Schutzrohr lediglich zurückgezogen werden. Bei der Herstellung dieses Schutzrohrs muß darauf geachtet werden, daß die Abstände der ringförmigen Stützkörper während des Anbringens der Schutzhülle beibehalten werden. Um ein Verkippen der einzelnen Stützkörper zu vermeiden, muß ferner sichergestellt sein, daß eine feste Verbindung zwischen der Schutzhülle und den Stützkörpern besteht.

Rohre mit in der Wandung eingebetteten Stützkörpern sind auch aus DE 34 39 670 A1 und AT 395 642 B bekannt. Bei diesen bekannten Rohren besteht die Wandung durchgehend aus einem ersten vergleichsweise flexiblen Material, wobei Verstärkungselemente an der Innenseite dieser Wandung aus erstem Material angeordnet und fixiert sind.

Der Erfindung liegt die Aufgabe zugrunde, ein Schutzrohr für eine Versorgungsleitung, insbesondere für ein mindestens eine Kunststoffschicht aufweisendes mediumführendes Rohr zu schaffen, das einfach und ohne zusätzliche Hülle zum Fixieren der Stützkörper herstellbar ist und dessen Länge auf einfache Weise veränderbar ist.

Die Lösung der Aufgabe erfolgt erfindungsgemäß durch die Merkmale des Patentanspruchs 1.

Erfindungsgemäß weist das Schutzrohr mehrere ring- oder wendelförmige Stützelemente und mehrere ring- oder wendelförmige Verformungselemente auf. Die Verformungselemente weisen eine höhere axiale Verformbarkeit auf als die Stützelemente, so daß die Länge des Schutzrohrs durch axiale Kräfte verkürzt werden kann. Die Stützelemente und die Verformungselemente sind in axialer Richtung aneinander angrenzend angeordnet. Es ist somit nicht erforderlich, eine sich über die gesamte Länge des Schutzrohrs erstreckende Schutzhülle entsprechend dem in EP 0 822 365 A1 beschriebenen Schutzrohr vorzusehen, durch die die Stützelemente auf Abstand gehalten werden. Bei dem erfindungsgemäßen Schutzrohr sind die Verformungs- und die Stützelemente im wesentlichen über axiale Grenzflächen benachbarter Elemente miteinander verbunden. Bei dem erfindungsgemäßen Schutzrohr handelt es sich beispielsweise um einzelne in axialer Richtung aneinandergefügte Ringe, wobei die Stützelemente stets eine ausreichende Scheiteldruckfestigkeit aufweisen und in den Verformungselementen durch. axiale Kräfte die Verkürzung des Schutzrohrs realisierbar ist. Die Verformungselemente können ebenso eine ausreichende Scheiteldruckfestigkeit aufweisen, sind jedoch stets in axialer Richtung zusammendrückbar.

Der Abstand und die Breite der Stützelemente sowie der Verformungselemente ist so gewählt, daß einerseits die in dem Schutzrohr angeordnete Versorgungsleitung stets vor Beschädigungen geschützt ist, andererseits das Schutzrohr auf einer vorgegebenen Länge ausreichend zusammengedrückt werden kann, um ein Anschlußstück an dem Ende der Versorgungsleitung/des mediumführenden Rohres befestigen zu können. Der Abstand der Stützelemente ist beispielsweise so gewählt, daß beim Treten auf ein Schutzrohr durch eine Person stets mindestens zwei Stützelemente belastet sind.

Vorzugsweise ist die Verformbarkeit der Verformungselemente dadurch realisiert, daß die Verformungselemente aus einem Material mit höherer Verformbarkeit als die Stützelemente bestehen. Somit kann auf einfache Weise durch entsprechende Materialwahl einerseits ein Stützelement mit ausreichender Scheiteldruckfestigkeit und andererseits ein Verformungselement mit der gewünschten axialen Verformbarkeit hergestellt werden. Vorzugsweise besteht das Verformungselement aus einem weichen elastischen Material, wie beispielsweise Polyethylen mit niedriger Dichte, und das Stützelement aus einem Material mit hoher Steifigkeit und hoher Scheiteldruckfestigkeit, beispielsweise Polyethylen mit hoher Dichte.

Das erfindungsgemäße Schutzrohr kann auf einfache Weise mittels eines Doppelextruders mit feststehendem oder rotierendem Kopf oder wendelförmiger Rohreinspeisung hergestellt werden. Bei einer derartigen Herstellung des Schutzrohrs werden die beiden unterschiedlichen Materialien lediglich an ihren axialen Grenzflächen geringfügig miteinander vermischt und dabei fest verbunden. Abgesehen von den Grenzflächen tritt keine Vermischung der beiden Materialien auf, so daß die Verformungselemente und die Stützelemente eindeutig voneinander getrennt sind.

Vorzugsweise weisen die Verformungselemente eine umlaufende Aus- oder Einbuchtung auf. Zur Vereinfachung wird im folgenden lediglich von Ausbuchtung gesprochen, wobei es sich hierbei stets auch um eine entsprechend ausgebildete Einbuchtung handeln kann. Durch das Vorsehen der verformbaren Ausbuchtung in dem Verformungselement kann auf einfache Weise die erforderliche Längenänderung zur Montage eines Anschlußstücks erreicht werden. Die Längenänderung des Verformungselements basiert somit auf elastischer Verformung des Verformungselements und/oder auf einer Kompression des Materials.

Durch eine entsprechende Ausgestaltung der Form der Ausbuchtung können die Stützelemente und die Verformungselemente des Schutzrohrs auch aus dem gleichen Material bestehen. Das Material weist hierbei, zumindest im Bereich der Stützelemente, die geforderte Scheiteldruckfestigkeit auf. Die Ausbuchtungen werden nach dem Extrudieren der Kunststoffmasse bzw. der beiden unterschiedlichen Kunststoffmassen durch Formteile in das noch nicht ausgehärtete Schutzrohr eingebracht.

Ebenso kann sowohl in den Verformungselementen als auch in den stützelementen jeweils mindestens eine Ausbuchtung vorgesehen sein. Die Form der Ausbuchtungen unterscheidet sich hierbei derart, daß die Ausbuchtungen der Verformungselemente so ausgebildet sind, daß durch axiale Kräfte im wesentlichen eine Verformung dieser Ausbuchtungen, und nicht der im Stützelement angeordneten Ausbuchtungen, stattfindet. Es ist somit möglich, allein durch die Gestaltung der Ausbuchtungen bei einem aus einem Material hergestellten Schutzrohr Bereiche zu definieren, die als Stützelemente, und Bereiche, die als Verformungselemente fungieren, festzulegen. Dies kann auf einfache Weise dadurch verwirklicht werden, daß die Neigung der Flanken bezüglich der Längsachse des Schutzrohrs in den beiden Bereichen unterschiedlich ist. Ebenso kann die Verwendung unterschiedlicher Materialien und unterschiedlicher Formgebungen der Ausbuchtungen kombiniert werden.

Vorzugsweise schließt bei Ausbuchtungen mit im wesentlichen U-förmigem Querschnitt zumindest eine der beiden Flanken mit der Längsachse des Schutzrohrs einen Winkel ein, der größer als 90° ist. Aufgrund der Kraftumlenkung einer axial auf die so ausgebildete Ausbuchtung wirkenden Kraft ist dieser Bereich als Stützelement ausgebildet. Die im Verformungselement ausgebildeten Ausbuchtungen weisen hierbei vorzugsweise im wesentlichen senkrecht zur Längsachse verlaufende Flanken auf, so daß diese Ausbuchtungen durch axiale Kräfte leichter verformbar sind.

Eine weitere Möglichkeit zur Gestaltung von Verformungs- und Stützelementen besteht darin, daß die Wandstärke der Verformungselemente geringer ist als die der Stützelemente. Diese Möglichkeit kann ebenso mit den vorstehend beschriebenen Möglichkeiten der unterschiedlichen Materialwahl sowie der unterschiedlichen Ausgestaltung der Ausbuchtungen kombiniert werden.

Nachfolgend wird die Erfindung anhand bevorzugter Ausführungsformen unter Bezugnahme auf die Zeichnungen näher erläutert.

Es zeigen:
- Fig. 1: eine schematische Seitenansicht eines Schutzrohrs gemäß einer ersten Ausführungsform, das aus zwei unterschiedlichen Materialien besteht,
- Fig. 2: eine schematische Seitenansicht eines Schutzrohrs gemäß einer zweiten Ausführungsform, das aus zwei unterschiedlichen Materialien besteht,
- Fig. 3: eine schematische Seitenansicht eines Schutzrohrs gemäß einer dritten Ausführungsform, das aus einem Material besteht,
- Fig. 4: eine schematische Seitenansicht des Schutzrohrs gemäß einer vierten Ausführungsform, das aus einem Material besteht, und
- Fig. 5: ein "Rohr-in-Rohr-System" mit einem Schutzrohr nach Fig. 4 und durch axiale Kompression des bzw. der Verformungselemente(s) freiliegendem Innenrohrende.

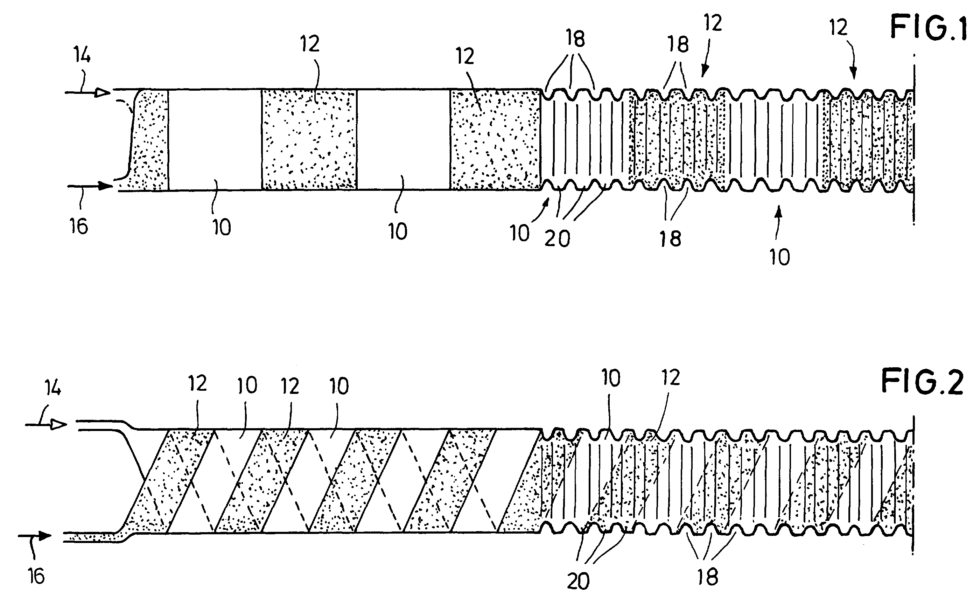

Die erste Ausführungsform eines Schutzrohrs (Fig. 1) besteht aus ringförmigen Stützelementen 10 und ringförmigen Verformungselementen 12. Die Stützelemente 10 und die Verformungselemente 12 sind abwechselnd angeordnet, so daß sie in axialer Richtung aneinandergrenzen. Benachbarte Elemente 10,12 überlappen sich gegenseitig nicht. Lediglich an den Grenzflächen zwischen zwei benachbarten Elementen 10,12 können geringfügige Vermischungen oder Überlappungen der beiden unterschiedlichen Materialien auftreten. Die beiden Materialien werden aus einem Doppelextruder abwechselnd entsprechend der Pfeile 14,16 extrudiert. Dadurch entstehen ringförmige Elemente 10,12. Durch das abwechselnde Extrudieren aus einem Extruderkopf werden die ringförmigen Elemente 10,12 an ihren aneinandergrenzenden Flächen während des Extrudierens miteinander verbunden, so daß aus dem Extruder ein einstückiges Rohr austritt, das abwechselnd ringförmige Stützelemente 10 und Verformungselemente 12 aufweist. Ein derartiges Rohr ist in dem linken Teil von Fig. 1 dargestellt.

In das noch nicht ausgehärtete Rohr werden durch Formteile Einbuchtungen 18 ausgebildet. Hierbei entstehen Ausbuchtungen 20. Bei der in Fig. 1 dargestellten Ausführungsform weisen die Einbuchtungen 18 im wesentlichen einen parabel- oder U-förmigen Querschnitt auf. Die hierbei entstehenden Ausbuchtungen 20 sind so ausgebildet, daß ihre Außenseiten stets einen konstanten Durchmesser haben, so daß ein Stützrohr mit gleichmäßigem Außendurchmesser entsteht. Die Form der Einbuchtungen 18 und der Ausbuchtungen 20 ist bei der in Fig. 1 dargestellten Ausführungsform bei den Stützelementen 10 und den Verformungselementen 12 identisch. Bei der Herstellung des in Fig. 1 dargestellten Stützrohrs müssen die Formteile, mittels denen die Ein- und Ausbuchtungen 18,20 hergestellt werden, daher nicht mit dem Extrudieren der unterschiedlichen Materialien, die für die Stützelemente 10 bzw. für die Verformungselemente 12 verwendet werden, synchronisiert werden.

Um die Länge des in Fig. 1 dargestellten Stützrohrs zu verändern, kann das Stützrohr in axialer Richtung zusammengedrückt werden. Hierbei verformen sich die Verformungselemente 12. Je nach Materialwahl findet entweder eine Kompression des für die Verformungselemente 12 eingesetzten Materials und/oder eine Verformung der Ein- und Ausbuchtungen 18,20 in den Verformungselementen 12 statt. Die Stützelemente 10 des Stützrohrs werden in axialer Richtung nicht oder nur geringfügig verformt. Das verwendete Material für die Stützelemente 10 weist eine hohe Steifigkeit und hohe Scheiteldruckfestigkeit auf.

Bei der zweiten Ausführungsform des Stützrohrs (Fig. 2) sind ebenfalls zwei unterschiedliche Materialien eingesetzt, aus denen die Stützelemente 10 und die Verformungselemente 12 hergestellt sind. Es handelt sich hierbei jeweils um wendelförmige Stütz- und Verformungselemente 10,12. Hierzu werden die beiden Materialien aus einem rotierenden Kopf eines Doppelextruders kontinuierlich in Richtung der Pfeile 14,16 gefördert. Durch die Drehung entstehen wendelförmige Abschnitte, die an ihren Grenzflächen durch das gleichzeitige Extrudieren fest miteinander verbunden sind. Entsprechend dem in Fig. 1 dargestellten Stützrohr werden Einbuchtungen 18 und Ausbuchtungen 20 durch Formteile in dem Stützrohr ausgebildet. Die Form der Ein- und Ausbuchtungen ist über die gesamte Länge des Stützrohrs konstant. Anstatt der Ausbildung von ringförmigen Ein- und Ausbuchtungen 18,20 können entsprechend der Form der Stützelemente 10 und der Verformungselemente 12 die Ein- und Ausbuchtungen 18,20 ebenfalls wendelförmig sein.

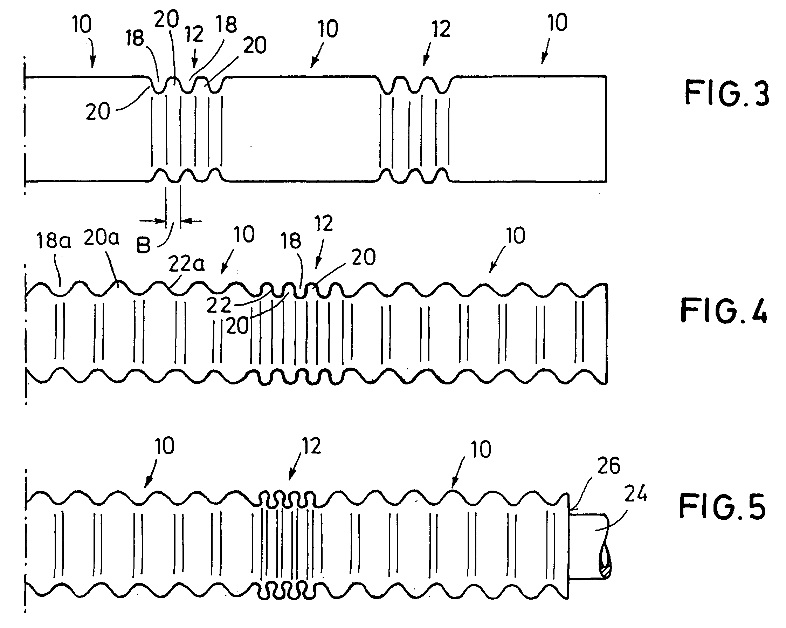

Die dritte Ausführungsform des Stützrohrs (Fig. 3) ist aus einem Material hergestellt, das die geforderte hohe Steifigkeit und Scheiteldruckfestigkeit aufweist. Die Verformungselemente 12 sind durch das Einbringen von Ein- und Ausbuchtungen 18,20 ausgebildet. Die Stützelemente 10 weisen keine Ein- oder Ausbuchtungen 18,20 auf, so daß das Stützrohr im Bereich der Stützelemente 10 ein Rohr mit glatter Oberfläche ist.

Die Ein- und Ausbuchtungen 18,20 weisen dieselbe Form wie die Ein- und Ausbuchtungen 18,20 der in den Fign. 1 und 2 dargestellten Ausführungsformen auf. Um die zur Verformung erforderliche Axialkraft zu verringern oder zu vergrößern, kann die Form der Ein- und Ausbuchtungen 18,20 variiert werden. Insbesondere kann die Neigung der Flanken 22 variiert werden. Eine Veränderung der erforderlichen Axialkraft kann ebenso durch ein Verändern der Breite B der Ausbuchtungen 20, der Anzahl der Einbuchtungen 18 je Verformungselement 12 und/oder dem Breitenverhältnis zwischen Verformungselement 12 und Stützelement 10 variiert werden.

Bei der in den Fign. 4 und 5 dargestellten vierten Ausführungsform weisen die Stützelemente 10 Ein- und Ausbuchtungen 18a,20a und die Verformungselemente 12 Ein- und Ausbuchtungen 18,20 auf. Das Stützrohr besteht aus einem Material mit ausreichender Steifigkeit und Scheiteldruckfestigkeit. Die Aus- und Einbuchtungen 18a,20a sind im Querschnitt im wesentlichen sinusförmig, wobei die Flanken 22a relativ flach und der Abstand zwischen benachbarten Ausbuchtungen 20 relativ groß ist. Die Ein- und Ausbuchtungen 18,20 der Verformungselemente 12 sind ebenfalls sinusförmig, jedoch erheblich enger als im Stützelement 10. Die Flanken 22 sind erheblich steiler als die Flanken 22a. Die Flanken 22 weisen gegenüber der Längsachse des Schutzrohrs vorzugsweise einen Winkel von etwa 90° auf. Durch das Aufbringen axialer Kräfte werden die Aus- und Einbuchtungen 18,20 im Verformungselement 12, wie in Fig. 5 dargestellt, verformt, so daß die Gesamtlänge des Stützrohrs verkürzt wird. Dadurch steht ein Ende eines mediumführenden Innenrohrs 24 oder einer anderen Versorgungsleitung über ein Ende 26 des Stützrohrs vor, so daß das Ende des Innenrohrs 24 beispielsweise mit einem Anschlußstück verbunden werden kann.

Die unterschiedliche Ausgestaltung der Aus- und Einbuchtungen 18,20 sowie die unterschiedliche Materialwahl für die Stützelemente 10 und die Verformungselemente 12 können auch entsprechend kombiniert werden.

## Patentansprüche

1. Schutzrohr für eine Versorgungsleitung, insbesondere für ein mindestens eine Kunststoffschicht aufweisendes mediumführendes Rohr, wobei das Schutzrohr aus ring- oder wendelförmigen Stützelementen (10) und ring- oder wendelförmigen Verformungselementen (12) gebildet ist, die Stützelemente (10) und die Verformungselemente (12) in axialer Richtung aneinander angrenzend angeordnet sind und die Verformungselemente (12) eine höhere axiale Verformbarkeit aufweisen als die Stützelemente (10).

2. Schutzrohr nach Anspruch 1, dadurch gekennzeichnet, daß die Verformungselemente (12) aus einem Material bestehen, das eine höhere Verformbarkeit als das Material der Stützelemente (10) aufweist.

3. Schutzrohr nach Anspruch 2, dadurch gekennzeichnet, daß die Verformungselemente (12) aus einem weichen, elastischen Material, vorzugsweise aus einem Polyethylen mit niedriger Dichte und die Stützelemente (10) aus einem Material mit hoher Steifigkeit und hoher Scheiteldruckfestigkeit, vorzugsweise einem Polyethylen mit hoher Dichte bestehen.

4. Schutzrohr nach einem der Ansprüche 1 bis 3, dadurch gekennzeichnet, daß die Verformungselemente (12) im Längsschnitt jeweils mindestens eine umlaufende durch axiale Kräfte verformbare Ein- oder Ausbuchtung (18,20) aufweisen.

5. Schutzrohr nach einem der Ansprüche 1 bis 4, dadurch gekennzeichnet, daß die Verformungselemente (12) und die Stützelemente (10) jeweils mindestens eine Ein- oder Ausbuchtung (18,20) aufweisen, wobei sich die Form der Ein- oder Ausbuchtungen (18,20) im Verformungselement (12) von derjenigen im Stützelement (10) derart unterscheidet, daß axiale Kräfte im wesentlichen eine Verformung der Ein- oder Ausbuchtungen (18,20) der Verformungselemente (12) hervorrufen.

6. Schutzrohr nach Anspruch 5, dadurch gekennzeichnet, daß die Ein- und/oder Ausbuchtungen (18,20) im wesentlichen einen U-förmigen Querschnitt aufweisen.

7. Schutzrohr nach Anspruch 6, dadurch gekennzeichnet, daß zumindest eine der Flanken (22a) der im Stützelement (10) vorgesehenen Ein- oder Ausbuchtungen (18a,20a) mit der Längsachse des Schutzrohrs einen Winkel einschließt, der größer als 90° ist.

8. Schutzrohr nach einem der Ansprüche 1 bis 7, dadurch gekennzeichnet, daß die Verformungselemente (12) und die Stützelemente (10) aus dem gleichen Material bestehen.

9. Schutzrohr nach einem der Ansprüche 1 bis 8, dadurch gekennzeichnet, daß die Verformungselemente (12) und die Stützelemente (10) abwechselnd vorgesehen sind.

10. Schutzrohr nach einem der Ansprüche 1 bis 9, dadurch gekennzeichnet, daß die Wandstärke der Verformungselemente (12) dünner als die der Stützelemente (10) ist.
